# EUROPÄISCHE PATENTSCHRIFT

(11) **EP 1 679 223 B1**
(45) Veröffentlichungstag und Bekanntmachung des Hinweises auf die Patenterteilung: **09.01.2008**
(21) Anmeldenummer: 05021354.5
(22) Anmeldetag: 30.09.2005
(51) Int. Cl.: B60N 2/02

(54) **Getriebe für eine Verstelleinrichtung**
Gear for an adjusting device
Transmission pour un dispositif de réglage

(30) Priorität: 11.01.2005 DE 102005001333
(43) Veröffentlichungstag der Anmeldung: 12.07.2006
(73) Patentinhaber: IMS Gear GmbH, 79871 Eisenbach (DE)
(72) Erfinder: Wöhrle, Michael, 78078 Niedereschach (DE); Birker, Stèphane, 78166 Donaueschingen (DE)
(74) Vertreter: Göhring, Robert

(56) Entgegenhaltungen:
- EP-B1- 1 068 093
- DE-A1- 10 308 028

## Beschreibung

Die Erfindung betrifft ein Getriebe für eine Verstelleinrichtung, insbesondere innerhalb eines Kraftfahrzeuges, vorzugsweise für eine Sitzverstelleinrichtung innerhalb eines Kraftfahrzeuges, gemäß den Merkmalen des Oberbegriffs des Anspruchs 1.

Ein solches Getriebe für eine Verstelleinrichtung, nämlich eine Kfz-Sitzlängsverstelleinrichtung, ist z. B. aus DE 103 08 028 A1 bekannt. Dieses Getriebe hat eine Gewindespindel und eine Spindelmutter mit einem Innengewinde. Die Spindelmutter sitzt auf der Gewindespindel. Das Innengewinde der Spindelmutter greift in das Spindelgewinde ein. Zu beiden Seiten der Spindelmutter ist je eine Lagerbuchse zur Lagerung der Spindelmutter vorgesehen.

Ein anderer bekannter Antrieb mit Getriebe für Sitzverstelleinrichtungen ist in der EP 1 068 093 B1 beschrieben. Der Antrieb ist in der dortigen und in der vorliegenden Figur 1 dargestellt. Wie ersichtlich, ist eine Halteplatte 1, auf der der Sitz eines Kraftfahrzeuges zu befestigen ist, einer Oberschiene 3 zugeordnet. An der Halteplatte 1 sind Befestigungslaschen 10 für einen Motor 2 vorgesehen, so dass dieser fest mit der Halteplatte 1 und damit fest mit der Oberschiene 3 verbunden werden kann. Beidseitig am Motor 2 sind Antriebswellen 11 angeordnet. Hierzu können flexible Wellen verwendet werden. Diese Antriebswellen 11 stellen die Verbindung zu einem Getriebe 9 her, das in der EP 1 068 093 B1 ausführlich beschrieben ist. Dieses Getriebe 9 sitzt in einem U-förmigen Haltebügel 8 mit Befestigungslöchern 7, durch welche das Getriebe 9 an der Oberschiene 3 befestigt werden kann.

Die Oberschiene 3 gleitet direkt oder über nicht dargestellte Verstell- und/oder Lagerelemente auf einer am Fahrzeugboden des Kraftfahrzeuges festgelegten Unterschiene 4.

In Funktionslage der Oberschiene 3 und Unterschiene 4 werden diese durch ihre Berührungs- bzw. Lagerungsbereiche so gehalten, dass sich ein Hohlraum ergibt. Innerhalb dieses Hohlraumes ist eine Gewindespindel 5 angeordnet. Diese Gewindespindel 5 wird zwischen Halterungen 6 aufgenommen, die auf der Unterschiene 4 fest angeordnet sind. Hierfür verfügen die Halterungen 6 über Befestigungslöcher, durch welche geeignete Schraubverbindungen oder ähnliche Befestigungsmittel ragen und an Befestigungslöchern der Unterschiene 4 gehalten werden. Die Spindel 5 ist selbst über geeignete Befestigungsmuttern an den Halterungen 6 festgeschraubt.

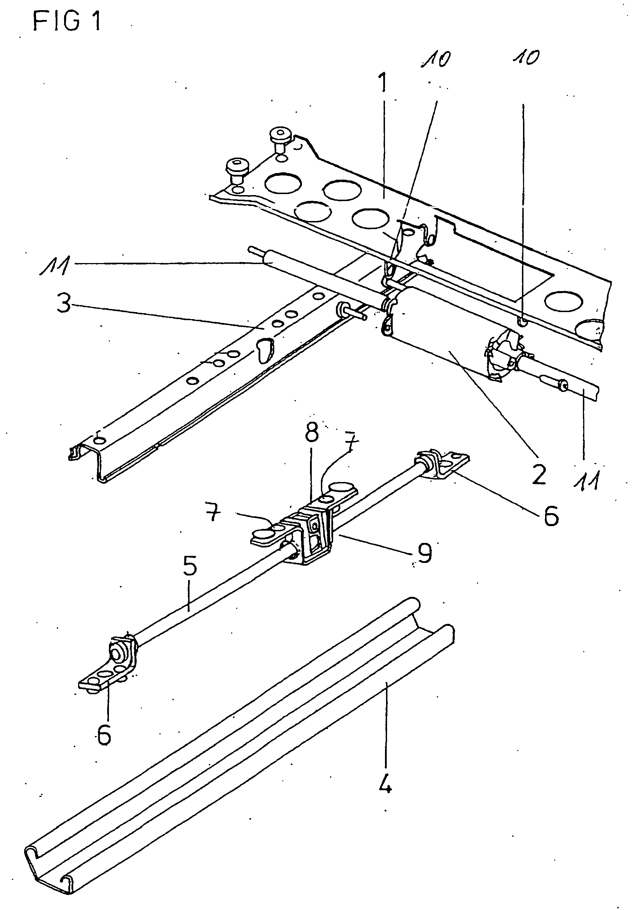

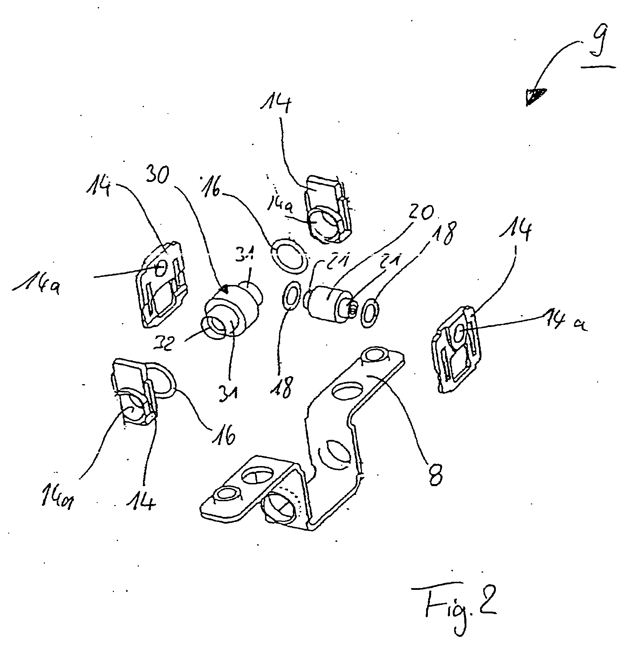

In Figur 2 ist das in Figur 1 dargestellte Getriebe 9 in seinen Einzelheiten gezeigt. Das Getriebe 9 besteht aus einer Antriebsschnecke 20, die über eine äußere Verzahnung mit einer Spindelmutter 30 in Eingriff steht. Die Antriebsschnecke 20 ist über die Antriebswelle 11 mit dem Motor 2 verbunden. Die Spindelmutter 30 weist ein Innengewinde 32 auf, welches mit der Gewindespindel 5 in Eingriff gebracht werden kann. Wenn sich der Motor 2 dreht, überträgt er seine Bewegung über die Antriebswellen 11 auf die Antriebsschnecke 20. Diese übermittelt ihre Drehbewegung auf die Spindelmutter 30. Da die Gewindespindel 5 bei dieser bekannten Antriebsanordnung drehfest in der Unterschiene 4 sitzt, muss das Getriebe 9 und damit die mit dieser verbundene Oberschiene 3 einschließlich des aufgebrachten Kraftfahrzeugsitzes eine Längsbewegung ausführen.

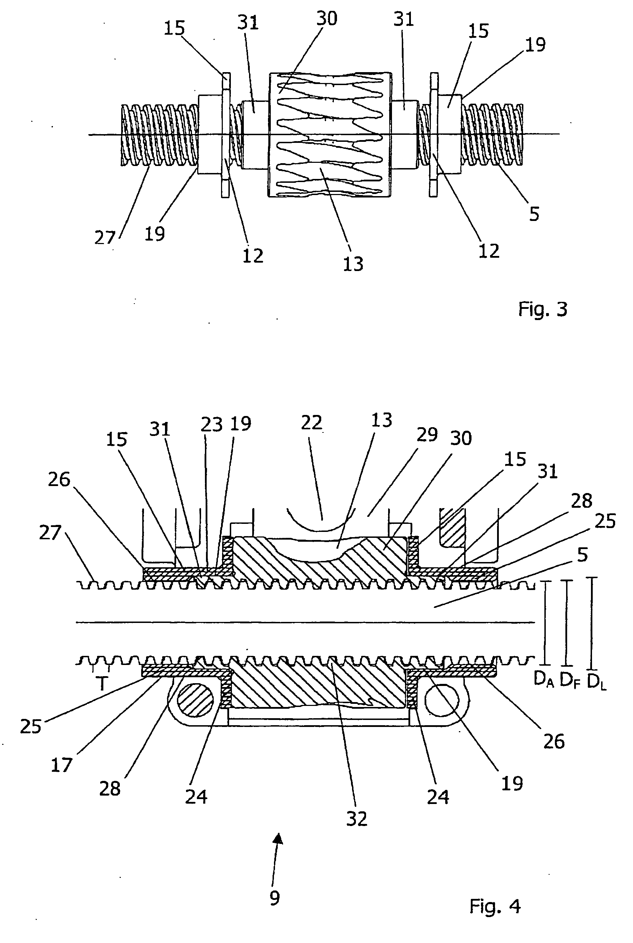

Wie aus Figur 2 ersichtlich, ist das die Antriebsschnecke 20 und die Spindelmutter 30 aufweisende Getriebe 9 in einem Gehäuse angeordnet, das aus vier Gehäuseplatten 14 besteht. Dieses Gehäuse mit den Gehäuseplatten 14 ist in der U-förmigen Ausbuchtung des Haltebügels 8 platziert. Sowohl die Antriebsschnecke 20 als auch die Spindelmutter 30 weisen ringförmige Vorsprünge an ihren Stirnseiten auf, die mit dem Bezugszeichen 21 bzw. 31 bezeichnet sind. Diese ringförmigen Vorsprünge 21, 31 sind in entsprechenden Öffnungen der Gehäuseplatten 14 gelagert. Hierfür weisen die einzelnen Gehäuseplatten 14 Lagerbuchsen 14a auf. Die hier einstückig mit dem Gehäuse ausgebildeten Lagerbuchsen 14a können auch als eigenständige Bauteile ausgebildet sein, die in Gehäuseöffnungen eingesteckt werden können. Für den Axialanlauf sitzen auf den erwähnten ringförmigen Vorsprüngen 31 des Schneckenrades 30 sogenannte Anlaufscheiben 16 und auf den ringförmigen Vorsprüngen 21 der Antriebsschnecke 20 Anlaufscheiben 18. Solche Anlaufscheiben 16, 18 sind insbesondere für die Spindelmutter 30 notwendig, weil bei der herkömmlichen zylinderförmigen Außenverzahnung einer solchen Spindelmutter 30 die Stirnflächen des Schneckenrades 30 unterbrochen sind. Die Anlaufscheiben 16, 18 werden zur Verschleißreduktion benötigt. Bei einer speziellen Ausgestaltung des Außengewindes mit einer Globoidverzahnung mit einem zylindrischem Abschnitt, die Gegenstand einer anderen Erfindung und in Figur 3 dargestellt ist, kann auf die Anlaufscheiben für die Spindelmutter verzichtet werden.

Wie erläutert, können die in Figur 2 dargestellten Lagerbuchsen 14a auch als selbstständige Bauteile 15 ausgebildet sein, die zwischen Spindelmutter 30 und weiteren Bauteilen, insbesondere dem Gehäuse, angeordnet werden. Eine Spindelmutter 30 mit solchen eigenständigen Lagerbuchsen 15 ist in Figur 3 dargestellt. Die Spindelmutter 30 weist eine umlaufende Außenverzahnung auf, um mit einer in Figur 3 nicht dargestellten Antriebschnecke kämmen zu können. Die Lagerbuchsen 15 der Spindelmutter 30 weisen einen kreiszylinderförmigen Lagerabschnitt 19 mit einer glatten Innenwand auf. In einem zusammengesetzten Getriebe 9 sitzen die Lagerbuchsen 15 mit ihrem jeweiligen Lagerabschnitt 19 auf den Vorsprüngen 31 der Spindelmutter 30 auf, um die Spindelmutter 30 drehbar zu lagern. Mit einem, von dem Lagerabschnitt 19 axial und radial beabstandeten zylindrischen Einsteckabschnitt 17 können die Lagerbuchsen 15 jeweils in eine Öffnung in einem nicht gezeigten Bauteil (z.B. eine Gehäuseplatte 14 gemäß Fig. 2) eingesteckt werden. Ein rechteckiger, radial vorstehender Befestigungsabschnitt 12 ermöglicht eine drehfeste Halterung in dem Getriebegehäuse. Die axiale Länge der Lagerbuchsen 15 entspricht der Länge der Vorsprünge 31. Die gezeigten Lagerbuchsen 15 haben ausschließlich die Funktion, die Spindelmutter axial sowie radial zu lagern.

Das bekannte Getriebe hat sich im Praxiseinsatz bewährt und ist geräuscharm. Es besteht jedoch, insbesondere im Kraftfahrzeugbereich, ein dauerndes Bestreben, Getriebe für Verstelleinrichtungen mit einer noch geringeren Geräuschentwicklung bereitzustellen.

Der Erfindung liegt daher die Aufgabe zugrunde, ein Getriebe für eine Verstelleinrichtung mit möglichst geringer Geräuschentwicklung vorzuschlagen.

Diese Aufgabe wird mit den Merkmalen des Anspruchs 1 gelöst.

Vorteilhafte Ausgestaltungen der Erfindung sind Gegenstand der Unteransprüche.

Dadurch, dass mindestens eine Lagerbuchse, vorzugsweise beide Lagerbuchsen, zusätzlich zu dem Lagerabschnitt zur axialen und/ oder radialen Lagerung der Spindelmutter einen Führungsabschnitt zur Führung der Spindelmutter relativ zur Gewindespindel aufweist, wird die Geräuschentwicklung beim Verstellbetrieb wesentlich reduziert. Neben der Lagefunktion für die Spindelmutter erfüllt die erfindungsgemäße Lagerbuchse zusätzlich die Funktion der Führung der Spindelmutter relativ zur Gewindespindel. Durch das Vorsehen eines Führungsabschnitts wird die Achsflucht zwischen Gewindespindel und Spindelmutter bei unterschiedlichen Belastungen, insbesondere bei der Vorwärts- bzw. Rückwärtsbewegung des Sitzes, optimiert. Hierdurch wird ein homogenes Geräuschverhalten bei unterschiedlichen Lastzuständen während der Verstellung unabhängig von der Auslegung und Oberflächenrauhigkeit des Spindelgewindes erreicht.

Grundsätzlich gibt es zwei Möglichkeiten, die Lagerbuchsen in dem Getriebe zu implementieren. Gemäß einer bevorzugten Ausführungsform handelt es sich bei den Lagerbuchsen um eigenständige Bauteile, insbesondere aus Kunststoff. Es ist jedoch auch denkbar, die Lagerbuchsen direkt in das Gehäuse zu integrieren, also einstückig mit dieser auszuführen. Es kommt in erster Linie darauf an, zusätzlich zu dem Lagerabschnitt, einen Führungsabschnitt vorzusehen.

Um die Führungseigenschaft des Führungsabschnitts zu optimieren, ist vorgesehen, dass der Führungsabschnitt kreiszylinderförmig ausgebildet ist. Der Führungsabschnitt hat also die Form einer Hülse, die die Gewindespindel über einen Axialabschnitt zumindest teilweise, insbesondere voll umfänglich, umgreift. Der Führungsabschnitt weist mit Vorteil kein Innengewinde auf. Die Innenfläche des Führungsabschnitts ist in Ausgestaltung der Erfindung glatt ausgebildet, um die Reibung und damit auch die Geräuschentwicklung zu vermindern.

Mit Vorteil ist vorgesehen, dass das Spiel zwischen, vorzugsweise kreiszylinderförmiger, Innenwand des Führungsabschnitts und dem Außendurchmesser der Gewindespindel etwa 0,05 bis 0,5 mm, insbesondere 0,1 bis 0,2 mm beträgt.

Damit der Führungsabschnitt ausreichende Führungseigenschaften aufweist, ist in Weiterbildung der Erfindung vorgesehen, dass die minimale axiale Länge des Führungsabschnitts der Teilung des Spindelgewindes entspricht. Die Teilung eines Gewindes entspricht dem Abstand entlang der Flankendurchmesserlinie zwischen benachbarten gleichgerichteten Flanken. Bei eingängigen Gewinden sind Teilung und Spindelgewindesteigung identisch. Bei mehrgängigen Spindelgewinden ist die Teilung gleich dem Quotienten aus Spindelgewindesteigung und Anzahl der Gewindegänge.

Gemäß einer vorteilhaften Ausgestaltung der Erfindung ist vorgesehen, dass die Spindelmutter an mindestens einer Stirnseite, vorzugsweise an beiden Stirnseiten, einen einstückig angeformten, ringförmigen Vorsprung aufweist, und dass auf dem Vorsprung die Lagerbuchse mit ihrem Lagerabschnitt, insbesondere mit einem axialen Lagerabschnitt zur radialen Lagerung der Spindelmutter, sitzt. Das Spiel zwischen Lagerabschnitt und Vorsprung ist so bemessen, dass eine möglichst reibungsfreie Drehung der Spindelmutter in dem Lagerabschnitt gewährleistet ist. Axial an den Lagerabschnitt schließt der Führungsabschnitt an. Der Innendurchmesser des Führungsabschnitts ist dabei geringer als der Innendurchmesser des Lagerabschnitts. Der Führungsabschnitt kann unmittelbar an den Vorsprung bzw. den Lagerabschnitt, oder mit Axialabstand an diesen anschließen.

In Weiterbildung der Erfindung ist vorgesehen, dass der Führungsabschnitt axial geschlitzt ist. Mit Vorteil sind hierzu zwei gegenüberliegende, axial verlaufende Schlitze vorgesehen.

Es ist auch denkbar, dass die Spindelmutter an mindestens einer Stirnseite, vorzugsweise an beiden Stirnseiten, einen einstückig angeformten, ringförmigen Vorsprung aufweist und dass der ringförmige Vorsprung den Lagerabschnitt der Lagerbuchse umgreift. Anders als bei der zuvor beschriebenen Ausführungsform ist die Spindelmutter bei dieser Variante an einem Außenumfang der Lagerbuchse drehbar gelagert. Die Lagerbuchse reicht demnach axial in die Spindelmutter hinein. Bei dieser Ausgestaltung ist von Vorteil, dass die tragende axiale Gewindelänge reduziert ist, wodurch die Reibung und damit die Geräuschentwicklung weiter reduziert wird.

Die zuletzt beschriebene Ausführungsform der Lagerbuchse ermöglicht es, den Führungsabschnitt über die gesamte axiale Länge der Lagerbuchse zu erstrecken. Somit kann eine optimale Achsflucht zwischen Gewindespindel und Spindelmutter erreicht werden.

Die Erfindung wird nachfolgend im Zusammenhang mit weiteren Figuren anhand von Ausführungsbeispielen näher erläutert.

Dabei zeigen:
- Figur 1: Den bereits erläuterten Antrieb nach dem bekannten Stand der Technik mit einem auf einer Spindel längs verfahrbaren Getriebe,
- Figur 2: das bereits erläuterte Getriebe von Figur 1 in Explosionsdarstellung mit Antriebsschnecke und Spindelmutter,
- Figur 3: die bereits erläuterte Spindelmutter mit eigenständigen Lagerbuchsen,
- Figur 4: einen teilgeschnittenen Ausschnitt eines erfindungsgemäßen Getriebes,
- Figur 5: eine gegenüber Figur 4 abgewandelte Ausführung eines erfindungsgemäßen Getriebes und
- Figur 6: eine weitere Ausführungsform eines erfindungsgemäßen Getriebes.

Das in Figur 4 dargestellte Getriebe 9 besteht aus einer Gewindespindel 5 und einer auf der Gewindespindel 5 sitzenden Spindelmutter 30 mit Außengewinde 13 und Innengewinde 32.

Mit der Außenverzahnung 13 der Spindelmutter 30 kämmt üblicherweise eine nicht dargestellte Antriebsschnecke, die in der Ausnehmung 22 drehbar gelagert ist. An beiden Stirnseiten der Spindelmutter 30 ist ein ringförmiger Vorsprung 31 einstückig angeformt. Das Innengewinde 32 der Spindelmutter 30 setzt sich bis zu dem axialen Ende der Vorsprünge 31 fort.

Auf jeder Seite der Spindelmutter 30 ist eine Lagerbuchse 15 vorgesehen. Beide Lagerbuchsen 15 sind eigenständige Bauteile aus Kunststoff. Jede Lagerbuchse 15 weist einen Lagerabschnitt 19 auf. Dieser Lagerabschnitt 19 besteht aus einem axialen Lagerabschnitt 23 und einem radialen Lagerabschnitt 24. Beide Lagerabschnitte 23 und 24 sind rotationssymmetrisch ausgebildet. Der axiale Lagerabschnitt 23 dient zur radialen Lagerung der Spindelmutter 30. Hierzu ist die Spindelmutter 30 mit ihren Vorsprüngen 31 in den axialen, hülsenförmigen Lagerabschnitten 23 des Lagerabschnitts 19 mit Radialspiel aufgenommen. Die axiale Lagerfunktion des Lagerabschnitts 19 wird von dem radialen Lagerabschnitt 24 übernommen. Unmittelbar an die Vorsprünge 31 bzw. an den axialen Lagerabschnitt 23 des Lagerabschnitts 19 schließt ein hülsenförmiger Führungsabschnitt zur Führung der in der Lagerbuchse 15 aufgenommenen Spindelmutter 30 auf der Gewindespindel 5. Der Führungsabschnitt 25 weist eine kreiszylindrische Form auf. In diesem Ausführungsbeispiel entspricht die axiale Länge des Führungsabschnitts 25 in etwa der dreifachen Teilung T des Spindelgewindes 27. Der Führungsabschnitt 25 weist kein Innengewinde auf und die Oberfläche der Innenwand 26 des Führungsabschnitts 25 ist glatt. Zwischen der Innenwand 26 des Führungsabschnitts 25 und dem Außendurchmesser D_{A} der Gewindespindel besteht ein Spiel von in etwa 0,1 bis 0,2 mm. Der Innendurchmesser des Führungsabschnitts D_{F} ist geringer als der Innendurchmesser D_{L} des axialen Lagerabschnitts 23 des Lagerabschnitts 19. Jede Lagerbuchse 15 weist einen Einsteckabschnitt 17 auf, der durch die kreiszylindrische Mantelfläche des Führungsabschnitts 25 und des axialen Lagerabschnitts 23 gebildet ist. Mit Hilfe des Einsteckabschnitts 17 ist jede Lagerbuchse 15 in eine Öffnung 28 eines, vorzugsweise aus Gehäuseplatten bestehenden Gehäuses 29 einsteckbar.

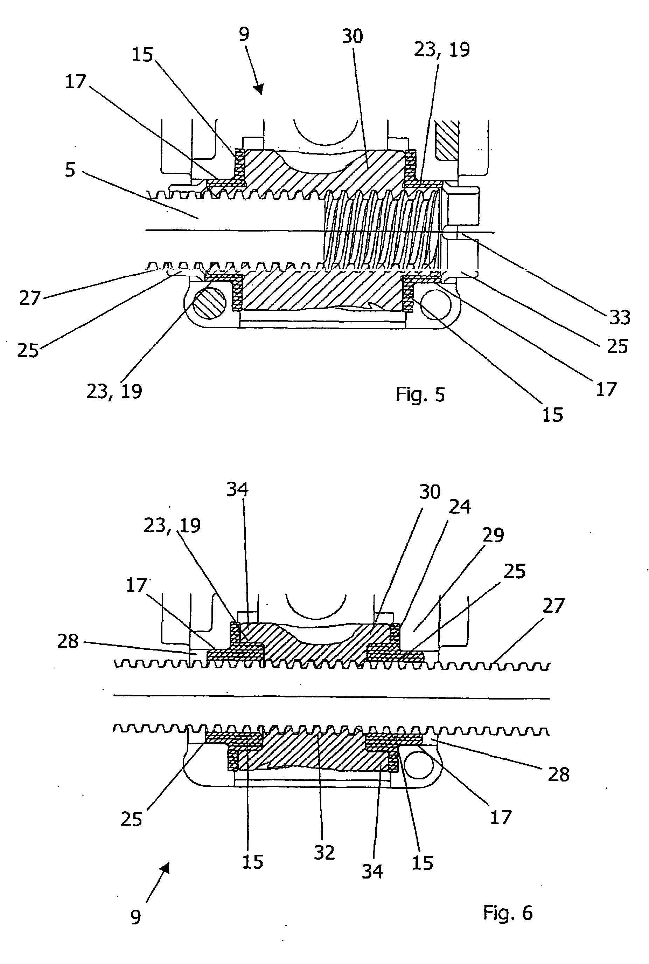

In Figur 5 ist ein weiteres Ausführungsbeispiel eines Getriebes 9 mit Spindelmutter 30 dargestellt. Die Antriebsschnecke 20 ist in Figur 5 aus Übersichtlichkeitsgründen nicht dargestellt.

Zu beiden Seiten der Spindelmutter 30 befindet sich eine Lagerbuchse 15. Der Einsteckabschnitt 17 der Lagerbuchsen 15 ist lediglich von dem Außenumfang des axialen Lagerabschnitts 23 des Lagerabschnitts 19 gebildet. Der Führungsabschnitt 25 ist gegenüber dem Einsteckabschnitt 17 radial abgesetzt, weist also einen geringeren Außendurchmesser auf. Um Fluchtungsänderungen zwischen Spindelachse zur Lagerbuchsenachse entlang der Verstellung des Getriebes auf der Gewindespindel 5 auszugleichen, ist der Führungsabschnitt 25 mit mindestens zwei, vorzugsweise diametral angeordneten, Axialschlitzen 33 geschlitzt. Weiterhin ist zu erkennen, dass die Führungsabschnitte 25 bei dem in Figur 5 dargestellten Ausführungsbeispiel, im Gegensatz zu den in den Figuren 3, 4 und 6 dargestellten Ausführungsbeispielen, spielfrei auf der Gewindespindel 5, bzw. dem Spindelgewinde 27, aufliegen.

Bei dem in Figur 6 dargestellten Getriebe 9 ist die Spindelmutter 30 geschnitten dargestellt, so dass das Innengewinde 32 sichtbar ist. Gegenüber den anderen Ausführungsbeispielen ist die axiale Länge des tragenden Innengewindes 32 verkürzt. Dies ist darauf zurückzuführen, dass die beidseitigen Lagerbuchsen 15 axial in die Spindelmutter 30 hineinragen. Hierzu weist die Spindelmutter 30 an beiden Stirnseiten zwei einstückig angeformte, ringförmige Vorsprünge 34 auf. Innerhalb der Vorsprünge 34 ist der axiale Lagerabschnitt 23 der Lagerbuchsen 15 aufgenommen. Der radiale Lagerabschnitt 24 befindet sich zwischen dem Gehäuse 29 und dem Vorsprung 34 der Spindelmutter 30. Der Führungsabschnitt 25 ist koaxial zu dem axialen Lagerabschnitt 23 angeordnet und erstreckt sich über die gesamte axiale Länge der Lagerbuchse 15. Koaxial zu dem Führungsabschnitt 25 ist der Einsteckabschnitt 17 angeordnet, mit dem die Lagerbuchse 15 in der Gehäuseöffnung 28 aufgenommen ist.

### Bezugszeichenliste

- 1: Halteplatte
- 2: Motor
- 3: Oberschiene
- 4: Unterschiene
- 5: Gewindespindel
- 6: Halterungen
- 7: Befestigungslöcher
- 8: Haltebügel
- 9: Getriebe
- 10: Befestigungslaschen
- 11: Antriebswellen
- 12: Befestigungsabschnitt
- 13: Außenverzahnung
- 14: Gehäuseplatten
- 14a: in Gehäuseplatten integrierte Lagerbuchsen
- 15: Eigenständige Lagerbuchsen
- 16: Anlaufscheibe
- 17: Einsteckabschnitt
- 18: Anlaufscheibe
- 19: Lagerabschnitt
- 20: Antriebsschnecke
- 21: Vorsprung
- 22: Ausnehmung
- 23: Axialer Lagerabschnitt
- 24: Radialer Lagerabschnitt
- 25: Führungsabschnitt
- 26: Innenwand
- 27: Spindelgewinde
- 28: Öffnung
- 29: Gehäuse
- 30: Spindelmutter
- 31: Vorsprung
- 32: Innengewinde
- 33: Axialschlitze
- 34: Vorsprung
- D_{F}: Innendurchmesser Führungsabschnitt
- D_{L}: Innendurchmesser axialer Lagerabschnitt
- D_{A}: Außendurchmesser Gewindespindel
- T: Teilung des Spindelgewindes.

## Patentansprüche

1. Getriebe (9) für eine Verstelleinrichtung, mit einer Gewindespindel (5) sowie mit einer Spindelmutter (30) mit einem Innengewinde (32), wobei die Spindelmutter (30) auf der Gewindespindel (5) sitzt und das Innengewinde (32) der Spindelmutter (30) in das Spindelgewinde (27) eingreift, und wobei zu beiden Seiten der Spindelmutter (30) je eine Lagerbuchse (14a, 15) zur Lagerung der Spindelmutter (30) vorgesehen ist,
**dadurch gekennzeichnet, dass** mindestens eine der Lagerbuchsen (15) zur Führung der Spindelmutter (30) relativ zur Gewindespindel (5) vorgesehen ist.

2. Getriebe nach Anspruch 1,
**dadurch gekennzeichnet, dass** die Lagerbuchse (15) zur Lagerung der Spindelmutter einen Lagerabschnitt, insbesondere mit einem axialen und mit einem radialen Lagerabschnitt, und zur Führung der Spindelmutter (30) relativ zur Gewindespindel (5) einen Führungsabschnitt (25) aufweist.

3. Getriebe nach Anspruch 2,
**dadurch gekennzeichnet, dass** der Führungsabschnitt (25) kreiszylinderförmig ausgebildet ist.

4. Getriebe nach einem der Ansprüche 2 oder 3,
**dadurch gekennzeichnet, dass** der Führungsabschnitt (25) innengewindefrei ist.

5. Getriebe nach einem der Ansprüche 2 bis 4,
**dadurch gekennzeichnet, dass** die Innenwand des Führungsabschnitts (25) glatt ist.

6. Getriebe nach einem der Ansprüche 2 bis 5,
**dadurch gekennzeichnet, dass** der Innendurchmesser (D_{F}) des Führungsabschnitts (25) dem Außendurchmesser (D_{A}) der Gewindespindel (5) zuzüglich eines Spiels entspricht.

7. Getriebe nach Anspruch 6,
**dadurch gekennzeichnet, dass** das Spiel 0,05 mm bis 0,5 mm, insbesondere 0,1 mm bis 0,2 mm, beträgt.

8. Getriebe nach einem der Ansprüche 2 bis 5,
**dadurch gekennzeichnet, dass** der Führungsabschnitt (25) spielfrei auf der Gewindespindel (5) aufliegt.

9. Getriebe nach einem der Ansprüche 2 bis 8,
**dadurch gekennzeichnet, dass** die minimale axiale Länge des Führungsabschnitts (25) der Teilung (T) des Spindelgewindes (27) entspricht.

10. Getriebe nach einem der Ansprüche 2 bis 9,
**dadurch gekennzeichnet, dass** die Spindelmutter (30) an mindestens einer Stirnseite einen einstückig angeformten, ringförmigen Vorsprung (31) aufweist, und dass auf dem Vorsprung (31) die Lagerbuchse (15) mit ihrem Lagerabschnitt (19, 23) sitzt, wobei der Führungsabschnitt (25) axial, mit Abstand oder unmittelbar, an den Vorsprung (31) anschließt.

11. Getriebe nach einem der Ansprüche 2 bis 10,
**dadurch gekennzeichnet, dass** die Spindelmutter (30) an mindestens einer Stirnseite einen einstückig angeformten, ringförmigen Vorsprung (34) aufweist und dass der ringförmige Vorsprung (34) den Lagerabschnitt (19, 23) der Lagerbuchse (15) umgreift.

12. Getriebe nach einem der Ansprüche 2 bis 11,
**dadurch gekennzeichnet, dass** sich der Führungsabschnitt (25) über die gesamte axiale Länge der Lagerbuchse (15) erstreckt.

13. Getriebe nach einem der Ansprüche 2 bis 12,
**dadurch gekennzeichnet, dass** der Führungsabschnitt (25) axial, vorzugsweise mit zwei diametral gegenüberliegenden Schlitzen (33), geschlitzt ist.

14. Getriebe nach einem der Ansprüche 1 bis 13,
**dadurch gekennzeichnet, dass** die Lagerbuchse (15) als ein eigenständiges Bauteil mit einem Einsteckabschnitt (17), zum Einstecken in ein Bauteil des Getriebes (9), insbesondere in ein Gehäuseteil (14, 29), ausgebildet ist.

15. Getriebe nach einem der Ansprüche 1 bis 14,
**dadurch gekennzeichnet, dass** die Lagerbuchse (15) einstückig mit einem Bauteil des Getriebes (9), insbesondere mit einem Gehäuseteil (14, 29), ausgebildet ist.

16. Getriebe nach einem der Ansprüche 1 bis 15,
**dadurch gekennzeichnet, dass** die Lagerbuchse (15) aus Kunststoff gefertigt ist.

17. Getriebe nach einem der vorhergehenden Ansprüche,
**dadurch gekennzeichnet, dass** die Verstelleinrichtung eine Sitzverstelleinrichtung für ein Kraftfahrzeug ist.

## Claims

1. Gear (9) for an adjusting device, with a threaded spindle (5) as well as a spindle nut (30) with an internal screw thread (32), wherein the spindle nut (30) sits on the threaded spindle (5) and the internal screw thread (32) of the spindle nut (30) engages with the spindle screw thread (27), and wherein a bearing bush (14a, 15) is provided respectively on either sides of the spindle nut (30) in order to bear the spindle nut (30),
**characterised in that** at least one of the bearing bushes (15) is provided for guiding the spindle nut (30) relative to the threaded spindle (5).

2. Gear as claimed in claim 1,
**characterised in that** the bearing bush (15) for bearing the spindle nut has a bearing section, in particular with an axial and a radial bearing section, and has a guide section (25) for guiding the spindle nut (30) relative to the threaded spindle (5).

3. Gear as claimed in claim 2,
**characterised in that** the guide section (25) is designed in the shape of a circular cylinder.

4. Gear as claimed in one of the claims 2 or 3,
**characterised in that** the guide section (25) does not have an internal screw thread.

5. Gear as claimed in one of the claims 2 to 4,
**characterised in that** the inner wall of the guide section (25) is smooth.

6. Gear as claimed in one of the claims 2 to 5,
**characterised in that** the internal diameter (D_{F}) of the guide section (25) corresponds to the outer diameter (D_{A}) of the threaded spindle (5), plus an amount for play.

7. Gear as claimed in claim 6,
**characterised in that** the play is 0.05 mm to 0.5 mm, in particular 0.1 mm to 0.2 mm.

8. Gear as claimed in one of the claims 2 to 5,
**characterised in that** the guide section (25) rests without play on the threaded spindle (5).

9. Gear as claimed in one of the claims 2 to 8,
**characterised in that** the minimum axial length of the guide section (25) corresponds to the pitch (T) of the spindle screw thread (27).

10. Gear as claimed in one of the claims 2 to 9,
**characterised in that** on at least one end face, the spindle nut (30) has a ring-shaped projection (31), formed on in one piece with it, and that the bearing bush (15) sits with its bearing section (19, 23) on the projection (31), with the guide section (25) following on axially, at a distance or directly, from the projection (31).

11. Gear as claimed in one of the claims 2 to 10,
**characterised in that** on at least one end face, the spindle nut (30) has a ring-shaped projection (34), formed on in one piece with it, and that the ring-shaped projection (34) encompasses the bearing section (19, 23) of the bearing bush (15).

12. Gear as claimed in one of the claims 2 to 11,
**characterised in that** the guide section (25) extends over the entire axial length of the bearing bush (15).

13. Gear as claimed in one of the claims 2 to 12,
**characterised in that** the guide section (25) is slit axially, preferably with two slits (33) lying diametrically opposite one another.

14. Gear as claimed in one of the claims 1 to 13,
**characterised in that** the bearing bush (15) is designed as an independent component with an insertion section (17), for insertion into a component of the gear (9), in particular into a housing part (14, 29).

15. Gear as claimed in one of the claims 1 to 14,
**characterised in that** the bearing bush (15) is designed to form one piece with a component of the gear (9), in particular with a housing part (14, 29).

16. Gear as claimed in one of the claims 1 to 15,
**characterised in that** the bearing bush (15) is made of plastic.

17. Gear as claimed in one of the preceding claims,
**characterised in that** the adjusting device is a seat adjusting device for a motor vehicle.

## Revendications

1. Transmission (9) pour un dispositif de réglage, comportant une broche filetée (5) ainsi qu'un écrou de broche (30) avec un filet intérieur (32), dans laquelle l'écrou de broche (30) est monté sur la broche filetée (5), et le filet intérieur (32) de l'écrou de broche (30) est en prise dans le filet de broche (27), et dans laquelle chaque fois un coussinet (14a, 15) est prévu de part et d'autre de l'écrou de broche (30) pour l'appui de l'écrou de broche (30),
**caractérisée en ce qu'**
au moins un des coussinets (15) est prévu pour guider l'écrou de broche (30) par rapport à la broche filetée (5).

2. Transmission selon la revendication 1,
**caractérisée en ce que**
le coussinet (15) comprend un segment d'appui, ayant notamment un segment d'appui axial et un segment d'appui radial pour l'appui de l'écrou de broche, et un segment de guidage (25) pour le guidage de l'écrou de broche (30) par rapport à la broche filetée (5).

3. Transmission selon la revendication 2,
**caractérisée en ce que**
le segment de guidage (25) est de forme cylindrique ronde.

4. Transmission selon l'une quelconque des revendications 2 ou 3,
**caractérisée en ce que**
le segment de guidage (25) est exempt de filet intérieur.

5. Transmission selon l'une quelconque des revendications 2 à 4,
**caractérisée en ce que**
la paroi intérieure du segment de guidage (25) est lisse.

6. Transmission selon l'une quelconque des revendications 2 à 5,
**caractérisée en ce que**
le diamètre intérieur (D_{F}) du segment de guidage (25) correspond au diamètre extérieur (D_{A}) de la broche filetée (5) majoré d'un jeu.

7. Transmission selon la revendication 6,
**caractérisée en ce que**
le jeu vaut de 0,05 mm à 0,5 mm, en particulier de 0,1 mm à 0,2 mm.

8. Transmission selon l'une quelconque des revendications 2 à 5,
**caractérisée en ce que**
le segment de guidage (25) est posé sans jeu sur la broche filetée (5).

9. Transmission selon l'une quelconque des revendications 2 à 8,
**caractérisée en ce que**
la longueur axiale minimale du segment de guidage (25) correspond au pas (T) du filet de broche (27).

10. Transmission selon l'une quelconque des revendications 2 à 9,
**caractérisée en ce que**
l'écrou de broche (30) présente sur au moins une face frontale une saillie annulaire (31), formée d'une pièce, et le coussinet (15) repose par son segment d'appui (19, 23) sur la saillie (31), le segment de guidage (25) se raccordant axialement, à distance ou directement, à la saillie (31).

11. Transmission selon l'une quelconque des revendications 2 à 10,
**caractérisée en ce que**
l'écrou de broche (30) présente sur au moins une face frontale une saillie annulaire (34), formée d'une pièce, et la saillie annulaire (34) entoure le segment d'appui (19, 23) du coussinet (15).

12. Transmission selon l'une quelconque des revendications 2 à 11,
**caractérisée en ce que**
le segment de guidage (25) s'étend sur toute la longueur axiale du coussinet (15).

13. Transmission selon l'une quelconque des revendications 2 à 12,
**caractérisée en ce que**
le segment de guidage (25) est fendu axialement, de préférence avec deux fentes (33) diamétralement opposées.

14. Transmission selon l'une quelconque des revendications 1 à 13,
**caractérisée en ce que**
le coussinet (15) est un composant autonome avec un segment d'engagement (17), destiné à s'engager dans un composant de la transmission (9), en particulier dans une partie de boîtier (14, 29).

15. Transmission selon l'une quelconque des revendications 1 à 14,
**caractérisée en ce que**
le coussinet (15) est formé d'une pièce avec un composant de la transmission (9), en particulier avec une partie de boîtier (14, 29).

16. Transmission selon l'une quelconque des revendications 1 à 15,
**caractérisée en ce que**
le coussinet (15) est en matière plastique.

17. Transmission selon l'une quelconque des revendications précédentes,
**caractérisée en ce que**
le dispositif de réglage est un dispositif de réglage de siège pour un véhicule automobile.
